(19) Europäisches Patentamt
European Patent Office
Office européen des brevets

(11) EP 4 723 430 A1

(12) **EUROPEAN PATENT APPLICATION**

(43) Date of publication:
08.04.2026 Bulletin 2026/15

(21) Application number: 24203897.4

(22) Date of filing: 01.10.2024

(51) International Patent Classification (IPC):
$H02J\ 13/00^{(2026.01)}$   $C25B\ 1/04^{(2021.01)}$
$C25B\ 15/02^{(2021.01)}$   $H02J\ 15/00^{(2026.01)}$
$H02J\ 3/14^{(2026.01)}$

(52) Cooperative Patent Classification (CPC):
H02J 13/12; C25B 9/70; C25B 15/02;
C25B 15/023; H02J 3/14; H02J 15/50; C25B 1/04

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: **Siemens Energy Global GmbH & Co.**
**KG**
**81739 München (DE)**

(72) Inventors:
• **Calic, Nemanja**
**91052 Erlangen (DE)**
• **Schumann, Sven**
**91452 Wilhermsdorf (DE)**

(54) **METHOD FOR ESTIMATING AN ACTUAL AC POWER CONSUMPTION CHARACTERISTIC OF AN ELECTROLYSIS SYSTEM**

(57) A method 200 for estimating an actual AC power consumption characteristic of an electrolysis system is presented, that is identically constructed to a reference system which comprises an AC/DC power conversion arrangement connected to a set of electrolyser units. The method 200 comprises determining 204 an initial voltage-current characteristic at an input of an electrolyser unit of the reference system in an initial condition, determining 206 a degraded voltage-current characteristic at that input in a degraded condition corresponding to a condition after operating the reference system for a maximum operation time, operating 208 the electrolysis system at a selected actual operating point, determining 210 an actual linear voltage-current characteristic at an input of an electrolyser unit of the electrolysis system as an actual linear function defined by the selected actual operating point and an intersection point between a first linear function comprising a section of the initial linear voltage-current characteristic beyond an initial minimum operating point of the electrolyser unit of the reference system and a second linear function comprising a section of the degraded linear voltage-current characteristic beyond a degraded minimum operating point, and estimating 212 an actual AC power consumption characteristic of the electrolysis system based on the actual linear voltage-current characteristic at the input of the electrolyser unit of the electrolysis system and a power loss of the AC/DC power conversion arrangement.

FIG 2

200

Start — 202

— 204

— 206

— 208

— 210

— 212

— 214

— 216

End — 218

## Description

The present disclosure in general relates to the estimation of expected alternating current (AC) power consumption of an electrolysis plant, i.e., a large-scale electrolysis system, in relationship to the direct current (DC) required for producing a requested amount of hydrogen. More particularly, the present disclosure relates to a method for estimating an actual AC power consumption characteristic of an electrolysis system. Further, the present disclosure relates to an electrolysis system, a computer program product, a computer-readable storage medium and a data carrier signal.

Electrolysis of water using direct current generated from energy provided by renewable energy sources enables a carbon-free production of hydrogen. As the interest in hydrogen production is increasing so are the projects and planned plant sizes which in turn bring new aspects of consideration for their power grid integration. Some of those aspects are load management (balancing of the electrical power supply and electrical load), estimation of the power grid support capability, and the performance of the power control.

Power grids with connected renewable energy generating plants such as photovoltaic systems and wind farms provide varying electrical power depending on current, i.e., actual, environmental conditions. Connecting an electrolysis plant to such a variable power grid requires information related to the AC power consumption range of the electrolysis plant. This information is needed to establish the normal (minimum and maximum) operating range limits for the electrolysis plant.

An electrolysis plant consists of one or more electrolysis systems, wherein each electrolysis system itself may contain an AC/DC power conversion arrangement, i.e., an AC/DC power converter, configured to receive AC power from an AC power grid as an AC power supply and to convert AC power to DC power, and connected to supply the generated DC power to several parallel electrolyser units. Each electrolyser unit may consist of one or more electrolyser stacks or rows of multiple electrolyser modules, i.e., electrolyser cells, in which the hydrogen generation takes place when being supplied with the required direct current (DC).

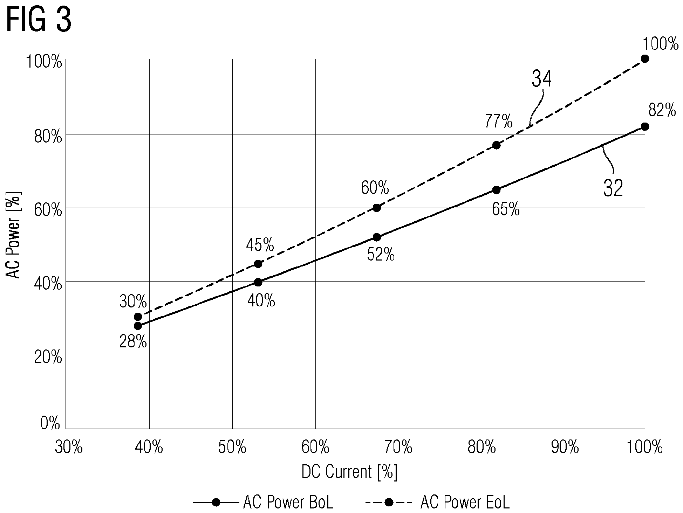

AC power consumption of an electrolysis system can be estimated for the "begin of life" (BoL), during which the electrolysis system hardware, in particular the set of electrolyser units performing the hydrogen electrolysis process, exhibits an initial condition or status that will then begin to change or degrade over time of operation, and for the "end of life" (EoL), i.e., a maximum operation time limit corresponding to a maximum acceptable degradation of the electrolyser units. The BoL power consumption is usually valid only at the start of first trial runs of the electrolysis system. After an initial trial run period, as the electrolyser units, i.e., stacks, begin to age, the required power consumption starts slowly to increase over a course of years, until it reaches its theoretical highest value at EoL, at which point the electrolyser units should be replaced. Because of the change of the AC power consumption characteristic over the electrolyser unit lifetime, in particular minimum and maximum AC power consumption values do not remain constant. Referring to Fig. 3, an example for AC power consumption characteristics at BoL 32 and at EoL 34 is illustrated, with DC current values and AC power consumption values normalised to percentage values, wherein the maximum DC current that can still be applied to the electrolyser unit at EoL corresponds to 100%, and the AC power consumption required to enable provision of that maximum DC current corresponds to 100% AC power consumption at EoL. It can be seen that in the shown example the AC power consumption ranges from a minimum of 28% to a maximum of 82% at BoL, which changes to a range from a minimum of 30% to a maximum of 100% AC power consumption at EoL. That is, for example, the AC power consumption required to provide the maximum 100% DC current to the electrolyser unit, and therefore to generate a maximum amount of hydrogen with the electrolyser unit, increases by 18% over the lifetime of the electrolyser unit.

The uncertainty caused by the changing AC power consumption characteristic of an electrolysis system connected to an AC power grid provides an issue for a controller of the electrolysis system and its integration into a higher-level control system of, e.g., a combined larger electrolysis plant and a grid control mechanism, in particular because of undefined or unknown actual boundary operating conditions.

In order to control hydrogen production of an electrolysis system, either the value of the DC current provided to the electrolyser unit or units of the electrolysis system or the AC power consumption of the electrolysis system can be set to a fixed setpoint as reference.

In case of using a DC current setpoint, the reference is directly proportional to the amount of produced hydrogen (H2) gas and is therefore practical for downstream process coordination. In this case, determining the amount of AC power required from the power grid (which may, for example, be supplied from a nearby photovoltaic (PV) plant or wind farm) can be accomplished by measuring the consumed AC power at the point of connection (PoC). However, the load management to keep the DC current provided to the electrolyser unit set to the selected reference setpoint can be done only after the actually measured AC power consumption value has been obtained, and there is no information on the potentially required AC power capability available for power "pre-ordering", and any coordination of power provision is considerably slowed down.

In case of using an AC power consumption setpoint as reference, the actual supply of direct current to the electrolyser units is controlled to keep the AC power consumption of the electrolysis system stable at the reference setpoint. An advantage in this case is that the power order or request for provision of power and the power consumption reference can be closely coordinated. However, a disadvantage is that the AC power provision capability of the power supply, i.e., the power grid, and the maximum AC power consumption are determined only for the immediate period after the start of operation of the electrolysis system (BoL) and the expected end of life (EoL) of the set of electrolyser units or stacks of the electrolysis system. The maximum AC power that may be consumed during the period between BoL and EoL is not explicitly defined. Hence, the real power grid support capability through lifetime of the electrolysis system can be estimated only roughly.

The impact on the load coordination and grid stability increases with the order of magnitude in size and capacity of the electrolysis systems or plants and will become a major issue with further increasing electrolysis plant capacities and will require to have precise plant operating parameters at any time instant, particularly for electrolysis plants in island grid operation with power mainly supplied by renewable power sources.

It is an objective of the present invention to provide an easy way of precisely estimating the possible range of AC power consumption of an aging electrolysis system connected to an AC power supply, at any time during the lifetime of the electrolysis system.

This objective is solved by a method for estimating an actual AC power consumption characteristic of an electrolysis system as stated in claim 1, an electrolysis system as stated in claim 6, a computer program product as stated in claim 7 suitable for configuring a controller unit of such an electrolysis system to carry out the claimed method, and a corresponding computer readable storage medium and data carrier signal as stated in claims 8 and 9, respectively. Advantageous additional embodiments of the invention are disclosed in the respective dependent claims.

According to a first aspect of the invention, a method for estimating an actual AC power consumption characteristic, i.e., curve, of an electrolysis system is provided, wherein the electrolysis system is identically constructed to a reference electrolysis system which comprises an AC/DC power conversion arrangement connected to a set of electrolyser units. The method comprises steps of determining an initial voltage-current characteristic at an input of an electrolyser unit of the reference electrolysis system in an initial condition and determining a degraded voltage-current characteristic at the input of the electrolyser unit of the reference electrolysis system in a degraded condition corresponding to a condition after operating the reference electrolysis system for a maximum operation time.

Further, the method comprises a step of operating the electrolysis system at a selected actual operating point.

And the method comprises a step of determining an actual linear voltage-current characteristic at an input of an electrolyser unit of the electrolysis system as an actual linear function defined by the selected actual operating point of the electrolysis system and an intersection point between a first linear function comprising a section of the initial linear voltage-current characteristic beyond an initial minimum operating point of the electrolyser unit of the reference electrolysis system and a second linear function comprising a section of the degraded linear voltage-current characteristic beyond a degraded minimum operating point of the electrolyser unit of the reference electrolysis system.

Further, the method comprises a step of estimating an actual AC power consumption characteristic of the electrolysis system based on said actual linear voltage-current characteristic at the input of the electrolyser unit of the electrolysis system and a power loss of the AC/DC power conversion arrangement.

The determination of an initial voltage-current characteristic at an input of an electrolyser unit of the reference electrolysis system in an initial condition refers to the determination of a VI curve, i.e., a voltage-current characteristic, corresponding to the relationship between the direct current provided to the input of an electrolyser unit of the reference electrolysis system and the DC voltage at the input for a time when the initial conditions of the reference electrolysis system still apply, i.e., "begin of life" (BoL) conditions.

The determination of a degraded voltage-current characteristic at the input of the electrolyser unit of the reference electrolysis system in a degraded condition corresponding to a condition after operating the reference electrolysis system for a maximum operation time refers to the determination of a VI curve corresponding to the relationship between the direct current provided to the input of the electrolyser unit of the reference electrolysis system and the DC voltage at the input for a time when conditions apply that correspond to a situation where the reference electrolysis system has been operated for a maximum operation time, i.e., "end of life" (EoL) conditions.

The voltage-current characteristics at BoL and EoL are determined for the reference electrolysis system, which is identically constructed to the electrolysis system. In other words, VI curves for BoL and Eol are determined for the reference electrolysis system only, for example in advance, and since the electrolysis system is identically constructed to the reference electrolysis system, the VI curves for BoL and Eol apply to the electrolysis system as well, regardless of its actual lifetime and degradation situation.

The electrolysis system, which is identically constructed to the reference electrolysis system, also comprises an AC/DC power conversion arrangement connected to a set of electrolyser units, just like the reference electrolysis system. The term "a set of electrolyser units" refers to "one or more electrolyser units".

The step of operating the electrolysis system (not the reference electrolysis system) at a selected actual operating point corresponds to either selecting an actual direct current setpoint (or a corresponding hydrogen production rate) of an electrolyser unit or selecting an actual AC power consumption setpoint or corresponding DC voltage setpoint, and applying the corresponding DC voltage and DC current to the input of the electrolyser unit(s). The actual operating point is the operating point applied to the input now, i.e., at the current point in time during the lifetime of the electrolyser unit, i.e., during the period of time between Bol and Eol of the electrolyser unit.

An actual linear voltage-current characteristic at an input of an electrolyser unit of the electrolysis system refers to a VI curve corresponding to the relationship between the direct current that could be provided to the input of an electrolyser unit of the electrolysis system, and the corresponding DC voltage at the input, wherein the selected actual operating point is a point on that linear VI curve.

The term "minimum operating point of the electrolyser unit" refers to the operating point that corresponds to the minimum direct current value that marks the begin of continuous hydrogen production in the electrolyser unit and can be identified as a kink point in the voltage-current characteristic. The section of (the initial or the degraded) linear voltage-current characteristic beyond an (initial or degraded) minimum operating point of the electrolyser unit corresponds to the section with direct current values higher than the direct current value associated with the minimum operating point.

The estimation of the actual AC power consumption characteristic of the electrolysis system at the point of connection (PoC) that connects the input of the AC/DC power conversion arrangement with an AC power grid on the one hand takes into account the actual linear voltage-current characteristic at the input of the electrolyser unit of the electrolysis system, which allows the determination of the DC power $P_{dc}$ supplied to the electrolyser unit at time t, and on the other hand takes into account the power loss $P_{loss}$ of the AC/DC power conversion arrangement. The power consumed by the electrolyser units $P_{dc}$ is a function of applied DC voltage $V_{dc}$, DC current $I_{dc}$ and ageing time t of electrolyser units. The actual AC power consumption $P_{AC}$ can therefore be described as $P_{AC}=P_{dc} (V_{dc}, I_{dc}, t) +P_{loss}$, wherein $P_{loss}$ summarizes possible power losses of each part of the AC/DC converter arrangement, particularly power losses at the transformer module and power losses at the rectifier module of the AC/DC power conversion arrangement, as well as AC&DC busbar losses and any upstream transmission/distribution losses within the electrolysis system. In a preferred embodiment, the power loss is represented as a function of DC current at the electrolyser input.

The disclosed method allows to determine the actual AC power consumption characteristic of an aged electrolysis system and thereby also offers an easy way to determine the actual AC power consumption range (minimum and maximum AC power consumption range) throughout the lifetime of the electrolysis system using the voltage-current characteristics at BoL and EoL of an identically constructed reference electrolysis system - these information may, for example, be provided by the system manufacturer in advance - and merely one selected actual operating point, i.e. the measured values of DC current and DC voltage at the input of the electrolyser unit(s) during regular hydrogen production in the electrolyser units of the currently operated electrolysis system.

The determination of the actual, i.e., intermediate (for time t between Bol and Eol), linear voltage-current characteristic at an input of an electrolyser unit of the electrolysis system is preferably carried out under the assumption that the relationship between $V_{dc}$ and $I_{dc}$ is approximately linear and can be represented by a straight-line equation $V_{dc} = k*I_{dc}+l$, where k is the gradient or slope of the line and l is the coordinate of the point where the line crosses the $V_{dc}$-axis. Since the voltage-current characteristics for BoL and EoL and any point in time between BoL to Eol are not parallel and intersect in one point, the coordinates $[V_p, I_p]$ of the intersection point can be calculated as follows: $I_p = \frac{l_{Eol} - l_{Bol}}{k_{EoL} - k_{BoL}}$ and

$$V_p = \frac{l_{Eol}*k_{BoL} - l_{Bol}*k_{EoL}}{k_{BoL} - k_{EoL}} .$$

In other words, the point of intersection is defined merely by parameters available from evaluating the voltage-current characteristics at BoL and Eol: For BoL $V_{dc} = k_{BoL} * I_{dc} + l_{BoL}$ , for EoL $V_{dc} = k_{EoL} * I_{dc} + l_{EoL}$.

Hence, the parameters $k_{int}$, $l_{int}$ of the the actual, i.e., intermediate (for t between Bol and Eol), linear voltage-current characteristic which changes as the electrolyser units age, can be determined any time as

$$k_{int} = \frac{V_{dc-meas} - \overline{V}_p}{I_{dc-meas} - I_p} \qquad \text{and}$$

$$l_{int} = V_{dc-meas} - \frac{V_{dc-meas} - V_p}{I_{dc-meas} - I_p} * I_{dc-meas} ,$$

i.e., based on measured values of DC current ($I_{dc-meas}$) and DC voltage ($V_{dc-meas}$) for the selected operating point of the electrolyser unit. In a preferred embodiment, values of DC current ($I_{dc-meas}$) and DC voltage ($V_{dc-meas}$) for the selected operating point of the electrolyser unit are constantly monitored, which allows a continuous update of the actual voltage-current characteristic at the electrolyser unit and thereby also of the actual AC power consumption range. Therefore, it becomes simpler for an operator to assess a maximum possible load of the electrolysis system or plant and any load balancing planning is simplified and accelerated. Further, any power grid support and the fulfilment of grid requirements and stability of the plant are also improved.

In a preferred embodiment of the method, the steps of determining an initial voltage-current characteristic at an input of an electrolyser stack of the reference electrolysis system in an initial condition and determining a degraded voltage-current characteristic at the input of the electrolyser stack of the reference electrolysis system in a degraded condition corresponding to a condition after operating the reference electrolysis system for a maximum operation time comprise reading previously stored reference data representing said initial voltage-current characteristic and said degraded voltage-current characteristic from a memory. Here, the initial voltage-current characteristic and the degraded voltage-current characteristic of an electrolyser unit of a reference electrolysis system are determined not by a user or operator of the actual electrolysis system, but, e.g., by the system manufacturer, prior to any operation of the actual electrolysis system. These information are stored in a memory, i.e., any storage device accessible for reading and providing the data to the controller unit of the electrolysis system, even before starting operation of the electrolysis system. This reduces the need for actually measuring voltage and current and still allows to easily provide the AC power consumption range of the actually operated electrolysis system.

In another embodiment of the method, an actual maximum DC power consumption is determined based on evaluating DC voltage and DC current values at the intersection point $[V_p, I_p]$, at said selected actual operating point $[V_{dc-meas}, I_{dc-meas}]$, and an actual full load DC current value $I_{DC100\%}$ at the input of the electrolyser unit. This allows to determine the full load voltage $\mathbf{V_{DC}\ 100\% = k_{int} * I_{DC}\ 100\% + I_{int}}$, and the full load DC power consumption in the actual, intermediate characteristic can be calculated by $\mathbf{P_{DC100\%} = V_{DC}\ 100\% * I_{DC}\ 100\%.}$ In other words, $\mathbf{P_{DC100\%}}$ can be directly determined anytime from the measured voltage and current at the actually selected operating point, together with knowledge of the full load DC current $\mathbf{I_{DC100\%}}$ and parameters derived from the BoL and EoL voltage-current characteristics of the electrolyser unit, which may be provided in advance. The term "full load" refers to producing the maximum possible hydrogen with the currently maximum possible direct current applied to the electrolyser unit.

In an example embodiment, an actual maximum AC power consumption $\mathbf{P_{AC100\%}}$ is determined based the actual maximum DC power consumption $\mathbf{P_{DC100\%}}$ at the input of said electrolyser unit and the power loss of the AC/DC power conversion arrangement. This allows to determine the actual maximum AC power consumption $P_{AC100\%}=P_{DC100\%}+P_{loss}$, i.e., $P_{AC100\%}$ can therefore be directly determined anytime from the measured voltage and current at the actually selected operating point, together with knowledge of $P_{loss}$ and the full load DC current $\mathbf{I_{DC100\%}}$ and parameters derived from the BoL and EoL voltage-current characteristics of the electrolyser unit, which may be provided in advance.

In a preferred example embodiment, the set of electrolyser units comprises multiple identical electrolyser units and the actual maximum DC power consumption is determined based on the actual maximum DC power consumption times the amount of identical electrolyser units. The AC/DC power conversion arrangement of the electrolysis system contains several electrolyser units in which the hydrogen generation takes place and which require the supply of direct current (DC). For example, the direct current for the electrolyser units is generated using a plurality of rectifier units which receive phase shifted alternating voltage signals from a transformer system connected to the AC power supply, e.g., an AC power grid. As an important example, the rectifier units may be thyristor-based rectifier units, and the AC/DC power conversion arrangement may comprise a parallel connection of several thyristor-based rectifier units such that a multipulse rectifier system, e.g., a 4x6-pulse system, i.e., a 24-pulse system, is formed to compensate harmonic noise by cancelling out their emitted lower harmonics. In this example, 4 identical electrolyser units are provided in parallel, each generating identical DC power consumption.

According to a second aspect of the invention, an electrolysis system comprises a set of electrolyser units, an AC/DC power conversion arrangement connected to an AC power source via a point of connection and connected to each electrolyser unit of the set of electrolyser units via a set of converter outputs, and a controller unit, which preferably at least comprises a programmable device and a memory. Further, the controller unit is configured to operate the set of electrolyser units at a selected operating point and to measure DC voltage and current values at the input of at least one of the electrolyser units. For this, the electrolysis system may comprise a dedicated sensor unit connected to the controller unit. The electrolysis system is identically constructed to a reference electrolysis system and the controller unit is configured to execute steps of the method for estimating an actual AC power consumption characteristic of an electrolysis system according to the first aspect of the invention and therefore implements the advantages and characteristics of the claimed method.

The programmable device refers to any data processing unit such as a central processing unit (CPU), microprocessor, microcontroller or any other processor. The memory can comprise a computer program product corresponding to a computer program adapted to configure the programmable device of the controller unit to carry out the method according to the first aspect of the invention.

According to a third aspect of the invention, a computer program product comprises code portions that, when executed on a controller unit of an electrolysis system according to the second aspect of the invention, enable the controller unit to execute steps of the method for estimating an actual AC power consumption characteristic of an electrolysis system according to the first aspect of the invention.

Further, according to a fourth aspect of the invention, a computer readable storage medium, has stored therein a computer program product according to the third aspect of the invention. And according to a fifth aspect of the invention, a data carrier signal is provided that carries a computer program product according to the third aspect of the invention. The computer program product may be provided on a computer readable storage medium, i.e., a data carrier, such as a CD, DVD, memory card or other storage medium, in particular a non-volatile storage medium, stored with data that is loadable in a memory of the controller unit, wherein the data represents the computer program. As another example, the data carrier may further be a data connection, such as a telephone cable or data cable or a wireless connection, and the computer program product may be represented as data carrier signal transmitted via the data carrier.

While not explicitly described, the presented embodiments may be employed in any combination or sub-combination.

The properties, features and advantages of the invention described above, and the manner in which they are achieved, will become clearer and more clearly understood in connection with the following description of the exemplary embodiments, which are explained in more detail in connection with the drawings, wherein

Fig. 1 schematically illustrates an example of an electrolysis system according to an embodiment of the invention;

Fig. 2 schematically illustrates an example of a method for estimating an actual AC power consumption characteristic of an electrolysis system, according to another embodiment of the invention;

Fig. 3 illustrates an example for BoL and EoL AC power consumption characteristics of an electrolysis system;

Fig. 4 shows an example illustration of BoL and EoL and intermediate voltage-current characteristics of an electrolyser unit of an electrolysis system;

Fig. 5 shows an example illustration of the intersection of BoL and EoL and intermediate voltage-current characteristics of an electrolyser unit of an electrolysis system; and

Fig. 6 illustrates an example for BoL and EoL and intermediate AC power consumption characteristics of an electrolysis system.

It is to be understood that other embodiments may be used and structural or logical changes may be made without departing from the scope of the present invention. It is to be understood that the features of the various exemplary embodiments described above and below may be combined with each other unless specifically stated otherwise. The description is therefore not to be taken in a limiting sense, and the scope of the present invention is defined by the appended claims.

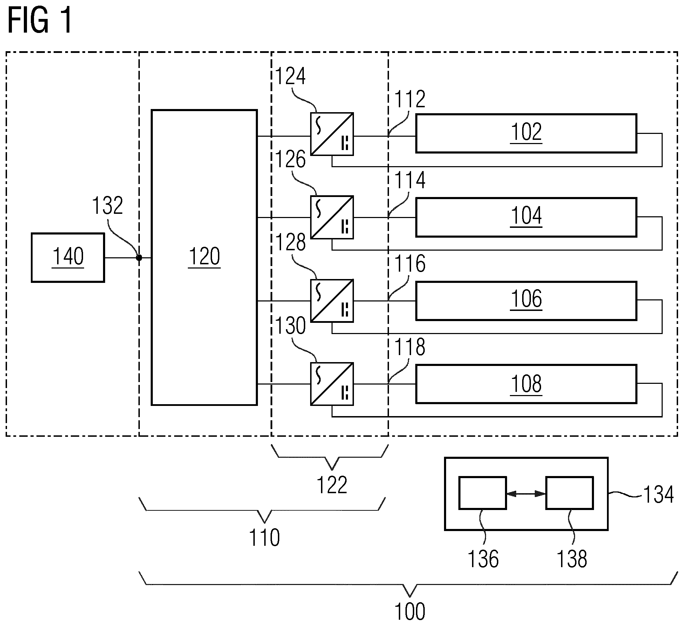

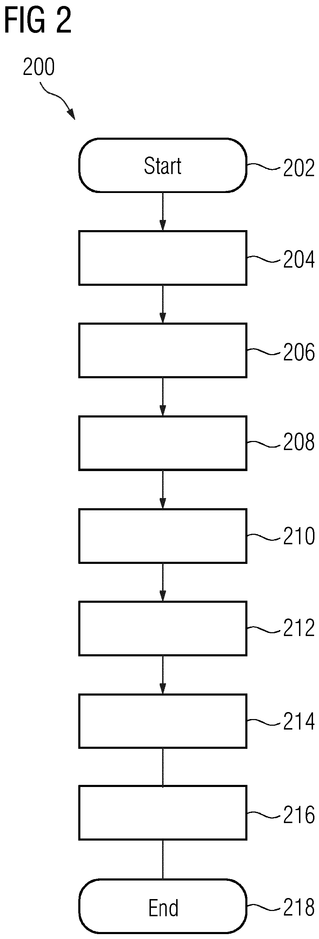

Referring to Fig. 1, an example of an electrolysis system 100 according to an embodiment of the invention is schematically illustrated. The shown example electrolysis system 100 contains a set of four electrolyser units 102, 104, 106, 108, i.e., electrolyser stacks. The electrolyser units 102, 104, 106, 108 are connected to receive direct current from an AC/DC power conversion arrangement 110 through inputs 112, 114, 116, 118. The AC/DC power conversion arrangement 110 contains a transformer module 120 connected to a rectifier module 122 comprising a set of four rectifier units 124, 126, 128, 130, each connected to receive phase-shifted alternating current from the transformer module 120 and to provide direct current to the inputs 112, 114, 116, 118 of the electrolyser units 102, 104, 106, 108 via a set of converter outputs. The transformer module 120 is further connected to receive AC power from an AC power supply 140, such as an AC power grid, via a point of connection (POC) 132. In the shown embodiment, the rectifier units 124, 126, 128, 130 may be thyristor-based rectifier units, and the AC/DC power conversion arrangement 110 may comprise a parallel connection of several thyristor-based rectifier units such that a 4x6-pulse system, i.e., a 24-pulse system, is formed to compensate harmonic noise by cancelling out their emitted lower harmonics. The four parallel electrolyser units 102, 104, 106, 108 are identical and each consume an identical amount of DC power when operated at corresponding operating points. Further, the electrolysis system 100 contains a controller unit 134, which comprises a programmable device 136 and a memory 138. The controller unit 134 is configured to operate the electrolysis system 100 at a selected operating point and to measure DC voltage and current values at the input 112, 114, 116, 118 of at least one of the electrolyser units 102, 104, 106, 108, for example by means of a dedicated sensor unit (not shown) connected to the input and the controller unit 134. The electrolysis system is identically constructed to a reference electrolysis system and the controller unit 134 is configured to execute steps of a method for estimating an actual AC power consumption characteristic of the electrolysis system 100, in particular the embodiment of the method described in the following in connection with Fig. 2. In order to carry out the method, the memory 138 comprises code portions of a computer program product, which, when loaded and executed by the processing device 136 of the controller unit 134, enable the controller unit 134 to carry out steps of the method.

Referring now to Fig. 2, an example of a method 200 for estimating an actual AC power consumption characteristic of an electrolysis system according to an embodiment of the invention is schematically illustrated, wherein the electrolysis system is identically constructed to a reference electrolysis system which comprises an AC/DC power conversion arrangement connected to a set of electrolyser units. After start 202, an initial voltage-current characteristic at an input of an electrolyser unit of the reference electrolysis system in an initial condition is determined 204. This initial condition may correspond to the condition of the electrolysis system at BoL of the electrolysis system, which may correspond to Bol of its electrolyser units.

Further, a degraded voltage-current characteristic at the input of the electrolyser unit of the reference electrolysis system in a degraded condition corresponding to a condition after operating the reference electrolysis system for a maximum operation time is determined 206. This degraded condition may correspond to the condition of the electrolysis system at EoL of the electrolysis system, which may correspond to Eol of its electrolyser units.

In a preferred embodiment, these steps 204, 206 are carried out well in advance, for example by the manufacturer of the electrolysis system, who then provides data describing initial and degraded voltage-current characteristics of the electrolysis system at BoL and EoL. Therefore, when carrying out the method by the controller unit of the electrolysis system, the steps of determining 204 an initial voltage-current characteristic at an input of an electrolyser stack of the reference electrolysis system in an initial condition and determining 206 a degraded voltage-current characteristic at the input of the electrolyser stack of the reference electrolysis system in a degraded condition corresponding to a condition after operating the reference electrolysis system for a maximum operation time merely correspond to or comprise reading previously stored reference data representing the initial voltage-current characteristic and the degraded voltage-current characteristic from a memory.

In a next step, the electrolysis system is operated 208 at a selected actual operating point.

Then, an actual linear voltage-current characteristic at an input of an electrolyser unit of the electrolysis system is determined 210 as an actual linear function defined by the selected actual operating point of the electrolysis system and an intersection point between a first linear function comprising a section of the initial linear voltage-current characteristic beyond an initial minimum operating point of the electrolyser unit of the reference electrolysis system and a second linear function comprising a section of the degraded linear voltage-current characteristic beyond a degraded minimum operating point of the electrolyser unit of the reference electrolysis system.

In a next step, an actual AC power consumption characteristic of the electrolysis system is estimated 212 based on the actual linear voltage-current characteristic at the input of the electrolyser unit of the electrolysis system and a power loss of the AC/DC power conversion arrangement.

In the shown embodiment, the method additionally comprises the step of determining 214 an actual maximum DC power consumption based on evaluating DC voltage and DC current values at the intersection point, at the selected actual operating point and an actual full load DC current value at the input of the electrolyser unit. The method further continues with determining 216 an actual maximum AC power consumption based on the actual maximum DC power consumption at the input of the electrolyser unit and the power loss of the AC/DC power conversion arrangement. For example, for an electrolysis system as shown in Fig. 1, wherein the set of electrolyser units comprises multiple identical electrolyser units and the actual maximum DC power consumption is determined 214 based on the actual maximum DC power consumption times the amount of identical electrolyser units.

Then the method ends 218, e.g., by switching off the electrolysis system. However, the method may be repeated either continuously or at certain time instants during the lifetime of the electrolysis system.

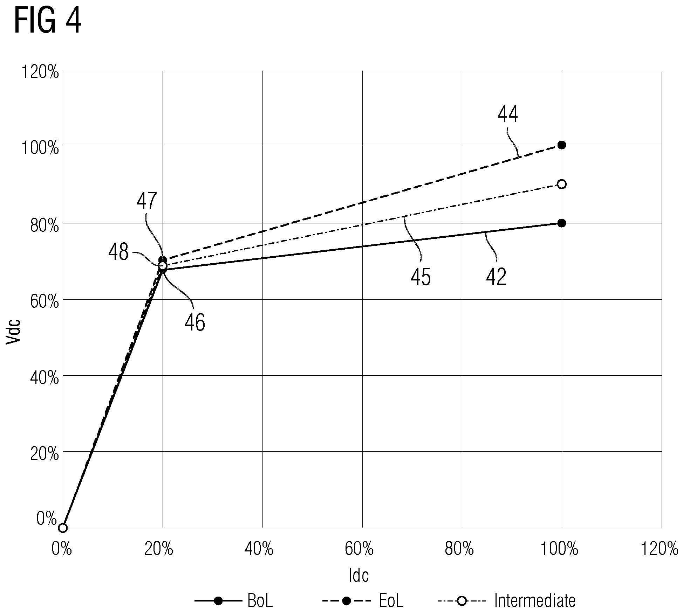

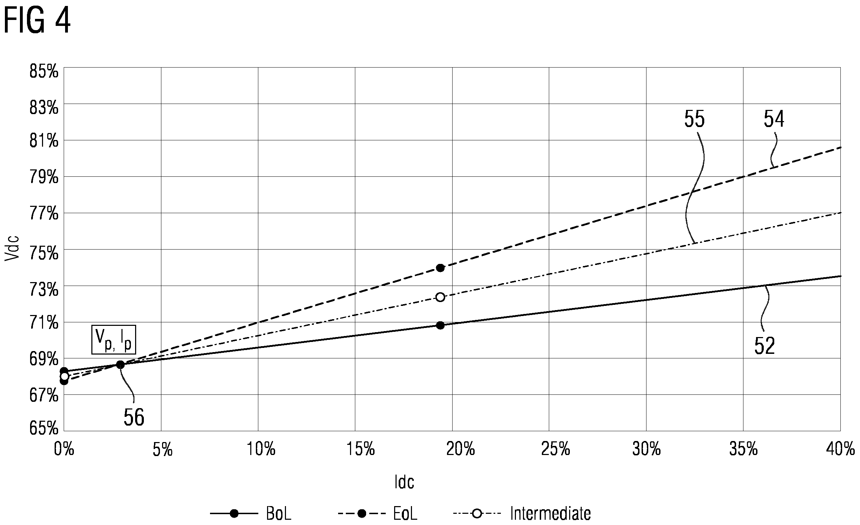

While an example for AC power consumption characteristics for "begin of life" BoL 32 and "end of life" EoL 34 of an electrolyser unit of an electrolysis system has already been described with reference to Fig. 3 above, additionally an example illustration of BoL and EoL and intermediate voltage-current characteristics of an electrolyser unit of an electrolysis system is illustrated in Fig. 4. Data describing the example voltage-current characteristic at BoL 42 and the voltage-current characteristic at EoL 44 may be available in advance, since they correspond to the characteristics determined for an identical reference electrolysis system, whereas the actual, intermediate voltage-current characteristic 45 can be determined from measuring DC voltage and direct current at the input of the electrolyser unit(s). The characteristics are illustrated with DC voltage and current values normalised to percentage values, wherein the maximum DC current that can still be applied to the electrolyser unit at EoL corresponds to 100%, and the DC voltage required to enable provision of that maximum DC current corresponds to 100% DC voltage at EoL. It can be seen that the BoL-, EoL- and actual, intermediate voltage-current characteristics 42, 44, 45 each exhibit kink points, each corresponding to a minimum operating point of the electrolyser unit that refers to the operating point that corresponds to the minimum direct current value that marks the begin of continuous hydrogen production in the electrolyser unit. The BoL minimum operating point 46, the EoL minimum operating point 47 and the actual, intermediate minimum operating point 48 are similar, however usually not identical. It can be seen that the voltage-current characteristics between the minimum operating point and the maximum operating point (with maximum DC current) can be well approximated as non-parallel, linear straight lines.

Referring to Fig. 5, an example illustration of the intersection of BoL and EoL and intermediate voltage-current characteristics of an electrolyser unit of an electrolysis system is shown.

The voltage-current characteristic at BoL 52 and the voltage-current characteristic at EoL 54 and the actual, intermediate voltage-current characteristic 55 are modelled as linear curves, i.e., straight lines, which are non-parallel and intersect at intersection point $[I_p, V_p]$ 56.

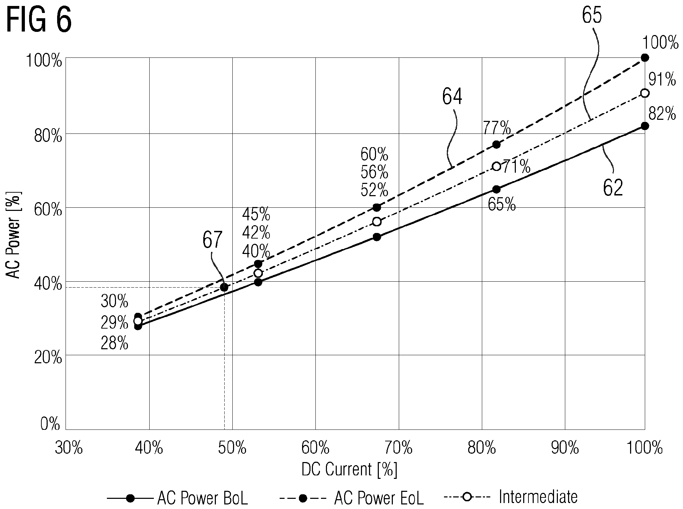

Now referring to Fig. 6, an example for BoL and EoL and actual, intermediate AC power consumption characteristics of an electrolysis system is shown. The BoL AC power consumption characteristic 62, the EoL AC power consumption characteristic 64 and the actual, intermediate AC power consumption characteristic 65 are shown with DC current values and AC power consumption values normalised to percentage values, wherein the maximum DC current that can still be applied to the electrolyser unit at EoL corresponds to 100%, and the AC power consumption generated to enable provision of that maximum DC current corresponds to 100% AC power consumption at EoL. The BoL AC power consumption characteristic 62 and the EoL AC power consumption characteristic 64 correspond to the BoL AC power consumption characteristic 32 and the EoL AC power consumption characteristic 34 shown in Fig. 3. It can be seen that in the shown example the AC power consumption ranges from a minimum of 28% to a maximum of 82% at BoL, which changes to a range from a minimum of 30% to a maximum of 100% AC power consumption at EoL. However, for the actual, intermediate AC power consumption characteristic 65, the AC power consumption ranges from a minimum of 29% to a maximum of 91%. That is, although the maximum AC power demand has increased from 82% to 91% since BoL of the electrolyser unit, it is still clearly less than 100% at EoL.

Since the actual AC power consumption range is known and better fits the actual reality of the degraded electrolysis system, the load management is improved. Further, the determination of available capacity of the electrolyser units for the estimation of grid support capacity of the electrolysis system is improved. And since the required measurements for the determination of the actual, intermediate voltage-current characteristic, and thereby of the actual, intermediate AC power consumption of the electrolysis system requires - apart from loading data related to the characteristics at BoL and EoL - merely the measurement of DC voltage at an electrolyser input for a selected DC current setpoint, or in other words, the measurement of DC voltage and DC current at the input for a selected operating point 67 of the electrolyser unit, the speed and accuracy of power control is improved.

Those skilled in the art will recognize that some boundaries between blocks in Fig. 1 and Fig. 2 are merely illustrative and that alternative embodiments may merge blocks or impose an alternative composition of functionality upon various blocks. It should be noted that, depending on the embodiment, method steps, although described and illustrated according to certain sequence or order of steps, may at least partly be carried out in a different order or simultaneously. Other steps may be added and certain steps described here may be left out.

Although the invention has been illustrated and described in detail by the shown preferred embodiments, the invention is not limited by the disclosed examples and other variations can be derived therefrom by those skilled in the art without departing from the scope of the invention.

In summary, a method 200 for estimating an actual AC power consumption characteristic of an electrolysis system is presented, that is identically constructed to a reference system which comprises an AC/DC power conversion arrangement connected to a set of electrolyser units. The method 200 comprises determining 204 an initial voltage-current characteristic at an input of an electrolyser unit of the reference system in an initial condition, determining 206 a degraded voltage-current characteristic at that input in a degraded condition corresponding to a condition after operating the reference system for a maximum operation time, operating 208 the electrolysis system at a selected actual operating point, determining 210 an actual linear voltage-current characteristic at an input of an electrolyser unit of the electrolysis system as an actual linear function defined by the selected actual operating point and an intersection point between a first linear function comprising a section of the initial linear voltage-current characteristic beyond an initial minimum operating point of the electrolyser unit of the reference system and a second linear function comprising a section of the degraded linear voltage-current characteristic beyond a degraded minimum operating point, and estimating 212 an actual AC power consumption characteristic of the electrolysis system based on the actual linear voltage-current characteristic at the input of the electrolyser unit of the electrolysis system and a power loss of the AC/DC power conversion arrangement.

Further, an electrolysis system, a computer program product, a computer readable storage medium and a data carrier signal are provided.

### Claims

1. Method (200) for estimating an actual AC power consumption characteristic of an electrolysis system, wherein the electrolysis system is identically constructed to a reference electrolysis system which comprises an AC/DC power conversion arrangement connected to a set of electrolyser units, **characterized in that** the method (200) comprises

    determining (204) an initial voltage-current characteristic at an input of an electrolyser unit of the reference electrolysis system in an initial condition;
    determining (206) a degraded voltage-current characteristic at the input of the electrolyser unit of the reference electrolysis system in a degraded condition corresponding to a condition after operating the reference electrolysis system for a maximum operation time;
    operating (208) the electrolysis system at a selected actual operating point;

determining (210) an actual linear voltage-current characteristic at an input of an electrolyser unit of the electrolysis system as an actual linear function defined by the selected actual operating point of the electrolysis system and an intersection point between a first linear function comprising a section of the initial linear voltage-current characteristic beyond an initial minimum operating point of the electrolyser unit of the reference electrolysis system and a second linear function comprising a section of the degraded linear voltage-current characteristic beyond a degraded minimum operating point of the electrolyser unit of the reference electrolysis system; and

estimating (212) an actual AC power consumption characteristic of the electrolysis system based on said actual linear voltage-current characteristic at the input of the electrolyser unit of the electrolysis system and a power loss of the AC/DC power conversion arrangement.

2. The method as claimed in claim 1, wherein the steps of determining (204) an initial voltage-current characteristic at an input of an electrolyser stack of the reference electrolysis system in an initial condition and determining (206) a degraded voltage-current characteristic at the input of the electrolyser stack of the reference electrolysis system in a degraded condition corresponding to a condition after operating the reference electrolysis system for a maximum operation time comprise

reading previously stored reference data representing said initial voltage-current characteristic and said the degraded voltage-current characteristic from a memory.

3. The method as claimed in claim 1 or claim 2, wherein an actual maximum DC power consumption is determined (214) based on evaluating DC voltage and DC current values at said intersection point, at said selected actual operating point and an actual full load DC current value at the input of said electrolyser unit.

4. The method as claimed in claim 3, wherein an actual maximum AC power consumption is determined (216) based on the actual maximum DC power consumption at the input of said electrolyser unit and the power loss of the AC/DC power conversion arrangement.

5. The method as claimed in claim 3 or claim 4, wherein the set of electrolyser units comprises multiple identical electrolyser units and the actual maximum DC power consumption is determined based on the actual maximum DC power consumption times the amount of identical electrolyser units.

6. Electrolysis system (100) comprising

a set of electrolyser units (102, 104, 106, 108);
an AC/DC power conversion arrangement (110) connected to an AC power source (140) via a point of connection and connected to each electrolyser unit of the set of electrolyser units (102, 104, 106, 108) via a set of converter outputs; and
a controller unit (134), wherein
the electrolysis system (100) is identically constructed to a reference electrolysis system and the controller unit (134) is configured to execute steps of a method (200) as claimed in any of the claims 1 to 5.

7. Computer program product, comprising code portions that, when executed on a controller unit (134) of an electrolysis system (100) according to claim 6, enable the controller unit (134) to execute steps of a method (200) as claimed in any of the claims 1 to 5.

8. Computer readable storage medium, comprising a computer program product as claimed in claim 7.

9. Data carrier signal carrying a computer program product as claimed in claim 8.

## FIG 1

124

132

140

120

126

128

130

122

110

112
102

114
104

116
106

118
108

100

134

136    138

# FIG 2

200

```
        ┌─────────────┐
        │    Start     │──── 202
        └─────────────┘
               │
               ▼
        ┌─────────────┐
        │             │──── 204
        └─────────────┘
               │
               ▼
        ┌─────────────┐
        │             │──── 206
        └─────────────┘
               │
               ▼
        ┌─────────────┐
        │             │──── 208
        └─────────────┘
               │
               ▼
        ┌─────────────┐
        │             │──── 210
        └─────────────┘
               │
               ▼
        ┌─────────────┐
        │             │──── 212
        └─────────────┘
               │
               ▼
        ┌─────────────┐
        │             │──── 214
        └─────────────┘
               │
               ▼
        ┌─────────────┐
        │             │──── 216
        └─────────────┘
               │
               ▼
        ┌─────────────┐
        │     End      │──── 218
        └─────────────┘
```

FIG 3

FIG 4

FIG 4

FIG 6

Europäisches
Patentamt
European
Patent Office
Office européen
des brevets

# EUROPEAN SEARCH REPORT

**Application Number**

EP 24 20 3897

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2023/279571 A1 (PMSVVSV PRASAD [US] ET AL) 7 September 2023 (2023-09-07) * paragraph [0056]; figures 1-8 * ----- | 1-9 | INV. H02J13/00 C25B1/04 C25B15/02 |
| A | WO 2024/170498 A2 (HYDROGEN WAVES LTD [GB]) 22 August 2024 (2024-08-22) * paragraph [0087]; figures 1-3 * ----- | 1-9 | H02J15/00 H02J3/14 |
| A | KOPONEN JOONAS ET AL: "Effect of power quality on the design of proton exchange membrane water electrolysis systems", APPLIED ENERGY, ELSEVIER SCIENCE PUBLISHERS, GB, vol. 279, 29 September 2020 (2020-09-29), XP086364500, ISSN: 0306-2619, DOI: 10.1016/J.APENERGY.2020.115791 [retrieved on 2020-09-29] * the whole document * ----- | 1-9 | |

**TECHNICAL FIELDS SEARCHED (IPC)**

H02J
C25B

The present search report has been drawn up for all claims

| Place of search | Date of completion of the search | Examiner |
|---|---|---|
| Munich | 4 March 2025 | Telega, Pawel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 .................................................................................

& : member of the same patent family, corresponding document

**EP 4 723 430 A1**

## ANNEX TO THE EUROPEAN SEARCH REPORT
## ON EUROPEAN PATENT APPLICATION NO.

EP 24 20 3897

04-03-2025

| Patent document cited in search report | | Publication date | Patent family member(s) | | Publication date |
|---|---|---|---|---|---|
| US 2023279571 | A1 | 07-09-2023 | CA | 3192194 A1 | 04-09-2023 |
| | | | CN | 116695154 A | 05-09-2023 |
| | | | EP | 4239825 A1 | 06-09-2023 |
| | | | JP | 2023129395 A | 14-09-2023 |
| | | | KR | 20230131152 A | 12-09-2023 |
| | | | TW | 202400844 A | 01-01-2024 |
| | | | US | 2023279571 A1 | 07-09-2023 |
| WO 2024170498 | A2 | 22-08-2024 | GB | 2627434 A | 28-08-2024 |
| | | | WO | 2024170498 A2 | 22-08-2024 |

EPO FORM P0459

For more details about this annex : see Official Journal of the European Patent Office, No. 12/82